# EUROPEAN PATENT SPECIFICATION

(11) **EP 1 969 828 B1**
(45) Date of publication and mention of the grant of the patent: **25.04.2018**
(21) Application number: 06829844.7
(22) Date of filing: 22.12.2006
(51) Int. Cl.: H04M 15/08, H04W 4/24

(54) **INTELLIGENT NETWORK FOR ADMINISTRATING PREMIUM RATE CALLS**
INTELLIGENTES NETZWERK ZUR VERWALTUNG VON ANRUFEN MIT ERHÖHTEM TARIF
RÉSEAU INTELLIGENT POUR GÉRER DES APPELS EN SERVICE KIOSQUE

(30) Priority: 27.12.2005 EP 05078004
(43) Date of publication of application: 17.09.2008
(73) Proprietor: Telefónica Germany GmbH & Co. OHG, 80992 München (DE)
(72) Inventor: SCHÖPPER, Jörg, 42579 Heiligenhaus (DE); CHRISTIANSEN Sönke, 40468 Düsseldorf (DE); DIEDRICH, Georg, 40468 Düsseldorf (DE)
(74) Representative: Herrmann, Uwe
(86) International application number: PCT/EP2006/012469
(87) International publication number: WO 2007/073928

(56) References cited:
- WO-A-02/054786
- CA-A1- 2 519 807
- US-A- 4 797 915
- US-A- 5 574 781
- US-B1- 6 381 326

## Description

### FIELD

The present invention relates to telecommunication networks, and more specifically to administrating premium rate calls in such a network.

### BACKGROUND

Previously in Germany, premium rate numbers, such as the 0190-numbers, where construed so that a calling party could directly derive the tariff out of the number concerned. Due to governmental legislations, a new type of number regime has to be introduced in Germany. In this new system, the 0190 numbers will be replaced by 0900 Premium service numbers. In the 0900 numbers, the tariff information is not located in the number range any more like for the 0190 numbers. The 0900 numbers will be classified by content. This means that for example information services start with 0900-1, leisure service start with 0900-3, adult services start with 0900-5 and diallers start with 0900-9. Furthermore, each individual premium rate service (PRS) number may be assigned its own tariff. Present Mobile Switching centres are not equipped to process the 0900 numbers. Modifying the MSCs concerned in a mobile telecom network will be very costly and time consuming. Examples of similar art are disclosed in CA2519807 and WO02/054786.

### SUMMARY

It is desirable to provide a method of administrating tariff information for premium service numbers wherein the tariff information is not located in the number range any more, and without the need for substantial adjustment of the MSCs present in a mobile telecom network.

### BRIEF DESCRIPTION OF THE DRAWINGS

Embodiments of the invention will now be described, by way of example only, with reference to the accompanying schematic drawings in which corresponding reference symbols indicate corresponding parts, and in which:
- Figure 1 diagrammatically shows a part of a mobile telecommunication network in which an embodiment of the invention is incorporated;
- Figure 2 shows a block diagram of part of the architecture of the network according to an embodiment;
- Figure 3 shows a principle scheme of a record in the database 26 for a subscriber;
- Figure 4 illustrates a sequence of announcements which may be generated by the 0900 service module;
- Figure 5 shows a flow chart of actions taken by the 0900 service module 16 according to an embodiment of the invention;.
- Figure 6 schematically depicts a part of the billing structure of the telecom network;
- Figure 7 schematically shows the IN service module 16 together with the database it receives information from.

### DETAILED DESCRIPTION

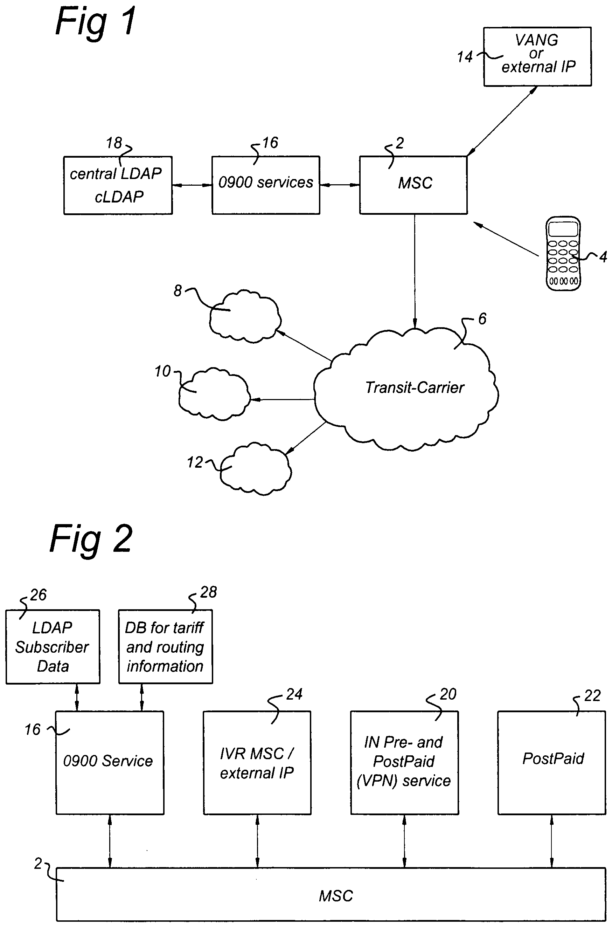

Figure 1 diagrammatically shows a part of a mobile telecommunication network in which an embodiment of the invention is incorporated. A state of the art Mobile Switching Centre 2, also referred to as MSC 2, is arranged to switch calls from a mobile telephone 4, to a state of the art transit-carrier network 6. The transit-carrier network 6 will pass the calls to other service provider networks 8, 10, 12. The MSC 2 also communicates with a VANG 14 which is arranged to produce announcements for the price of a call. The announcements are sent to the mobile telephone 4 before the actual connection is made.
According to the invention, an Intelligent Network 16 is arranged to communicate with the MSC 2 in order to process premium rate service number calls. The MSC 2 is arranged to receive a call message from the MSC 2. The call message comprises both a number of the calling party, i.e. the calling party number, and a number of a called party, i.e. the called party number. In an embodiment, the Intelligent Network 16 will only receive a call message from the MSC 2 if the calling party calls a 0900 service number. Therefore, the Intelligent network 16 is also referred to as the 0900 service module. It should be noted that the 0900 service number is just an example and other numbers may be used to invoke the Intelligent network 16. The 0900 service module 16 is arranged to access a central database 18 for retrieving e.g. subscriber data of the subscriber calling with the mobile telephone 4. According to an embodiment, the 0900 service module 16 is also arranged to modify the called party number and send the modified called party number to the MSC 2. the modification of the called party number is explained in more detail below.

Figure 2 shows a block diagram of part of the architecture of the network according to an embodiment. For the administration of the PRS numbers the new 0900 service is arranged next to already existing VPN 20 and a Post-Paid IN service 22. In this embodiment, the system architecture contains a database for subscriber info 26 and another database for tariff information 28. In an embodiment, both databases 26, 28 comprise real-time databases such as LDAP. Both LDAP databases 26, 28 may be provided and administrated by a service provider of the premium rate service. The exact implementation of these databases 26, 28 is not relevant for the invention, and will not be discussed here. In an embodiment, the new 0900 service module 16 is also arranged to support the addressing of announcements in the MSC 2 or an external IP 24.

In an embodiment, the tariff information depends on one or more subscriber parameters and one or more provider parameters provided by the service provider of 0900 numbers. Subscriber parameters are for example:
- the type of subscriber (Pre or Post-Paid),
- the name of the Independent Service Provider (ISP) of the subscriber.

In an embodiment, the service provider parameters comprise a so-called 'tariff cluster' which is a classification number used for classifying the possible PRS numbers into several clusters (i.e. sets) each having a unique tariff cluster number. A service provider may provide its 0900 number(s), corresponding routing information and a corresponding tariff cluster. The tariff cluster may for example be an index with 2 digits. This provides the possibility to address 100 different tariff clusters from 00 to 99.

In an embodiment, the following parameters are taken into account for the processing of a 0900 number and shall be administrated in the 0900 service module 16:
- service ID,
- tariff cluster,
- type of subscriber and
- ISP.

Table 1 illustrates a possible solution for the administration of the these parameters.

**Table 1**

| service ID | tariff cluster | Pre/PostPaid | ISP | price/min | price/call |
|---|---|---|---|---|---|
| 900 | 00 | PostPaid | E-Plus | 19 | 0 |
| 900 | 00 | PrePaid | E-Plus | 20 | 0 |
| 900 | 01 | PostPaid | E-Plus | 19 | 100 |
| : | : | : | : | : | : |
| 900 | 99 | PrePaid | E-Plus | 159 | 1500 |
| 900 | 00 | PostPaid | Debitel | 19 | 10 |
| : | : | : | : | : | : |
| 900 | 99 | Prepaid | Talkline | 19 | 0 |

In table 1 a price per minute and a price per call for every tariff cluster is defined depending on the type of subscriber (Pre/Post-Paid) and the customer's ISP. For every ISP 100 different tariff clusters are possible, i.e. 00-99. If for example a service provider administrates 15 ISPs, the maximum possible number of 0900 number entries in table 1 is 100 x 15 x 2 = 3000.

It is noted that the size of the table 1 is not restricted. Every field in this table may be handled flexible to add, to delete or to modify the content. Furthermore, the configuration of tariff cluster, Pre/Post-Paid, ISP and prices is not restricted to only the service (index) 900. The parameters price per minute and price per call are relevant for the announcements before connecting the call to the service provider as will be explained later on.

The 0900 service module 16 may also provide an interface to insert or extract (up- and download) all data of table 1 in a text file (bulk file). A new or an update of a tariff cluster in table 1 can be administrated in a timetable. The timetable may be administrated offline in the 0900 service module 16 itself. Depending of the configured date the 0900 service will then update in table 1 the price per minute and price per call. The 0900 service module 16 may for example check once per day if an update is necessary. It is also possible to load an update immediately into table 1. Any modification may be reported in a log file. An example of such an update table is illustrated by table 2.

**Table 2**

| Service | tariff cluster | Pre/Postpaid | ISP | Price/min | Price/Call | Valid from | Valid to |
|---|---|---|---|---|---|---|---|
| 0900 | 00 | Postpaid | E-Plus | 19 | 0 | 01.01.2005 | 31.06.2005 |
| 0900 | 00 | Postpaid | E-Plus | 20 | 5 | 01.07.2005 | 31.12.2005 |

The 0900 service module 16 ensures the update of a price . In case of failure the 0900 service module 16 may inform an administrator of the service provider concerned. Before a tariff model of a tariff cluster expires, the 0900 service module 16 may inform (e.g. warning) the administrator. The time when the warning is generated may be configurable in the 0900 service.

Depending on the ISP it may also be possible to configure a maximum price per minute and/or price per call. In case of an update for the data in table 1, the 0900 service module 16 will then first verify the new data with the configured maximum parameters. The verification could take place in the user GUI environment of a control server.

According to an embodiment, the 0900 service module 16 is arranged to access the database 28 for tariff and routing information. The database 28 for tariff and routing information may contain all kinds of 0900 numbers supported by a particular ISP. Next to the PRS numbers the table may contain a label for routing e.g. ClC, the tariff cluster number and the type of bearer service. The routing label may be a configurable parameter and need not be a fixed value. Table 3 illustrates a possible configuration.

**Table 3**

| service | premium rate service number | routing label | tariff cluster | bearer service |
|---|---|---|---|---|
| 900 | 49900123456 | C1C | 00 | speech |
| 900 | 4990078901 | C1C | 03 | fax |
| 900 | 499003777888 | BT3 | 11 | data |
| : | : | : | : | : |

Every PRS number will be described by the service identifier, e.g. 900. The 0900 service need not be restricted to handle only numbers described with the identifier 900.

The length of a PRS number may be variable. But the PRS numbers with the same content number (digit) can be conform. The tables below describes examples of the number length depending of the content number.

**Table 4: Number length with the content number 1, 3 or 5**

| prefix 900 | content number [1, 3, 5] | number |
|---|---|---|
| 3 | 1 | 6 |

**Table 5: Number length with the content number 9**

| prefix 900 | content number [9] | number |
|---|---|---|
| 3 | 1 | 7 |

The parameter bearer service in table 3 contains only the option for the service speech, fax and data, but other bearer type are possible. The 0900 service module may be arranged to verify the bearer configuration in table 2 with the data in an INAP IDP message.

Depending on a timeframe a service provider has the permission to change the configuration of the tariff cluster for his premium rate service number(s). This modification causes another price model for the 0900 number and has to be recognized by the 0900 service .

The parameter routing label and tariff cluster are forwarded in the called party number to the transit carrier network 6 independent of the type of subscriber (Pre or PostPaid). The 0900 service module 16 is arranged to modify the called party number. A possible modification of the called party number is an extension of the called party number with a prefix wherein the prefix consists of the routing label e.g. ClC (always 3 digits) and the tariff cluster e.g. 22 (always 2 digits). If a premium rate number has the format: 900 xxx and TON = national, then the modified called party number looks like e.g. ClC22 900 xxx, with TON = national.

In an embodiment, the 0900 service module 16 is arranged to access the database 26 for subscriber data. The 0900 service module 16 is arranged to evaluate whether a number can be routed to the destination or if it is marked as a so-called screened number. This information may be located in the database 26. Every profile of a Pre- or PostPaid subscriber in the database 26 provides the possibility to configure screening services of premium rate services. A correlation of more than one service number is possible.

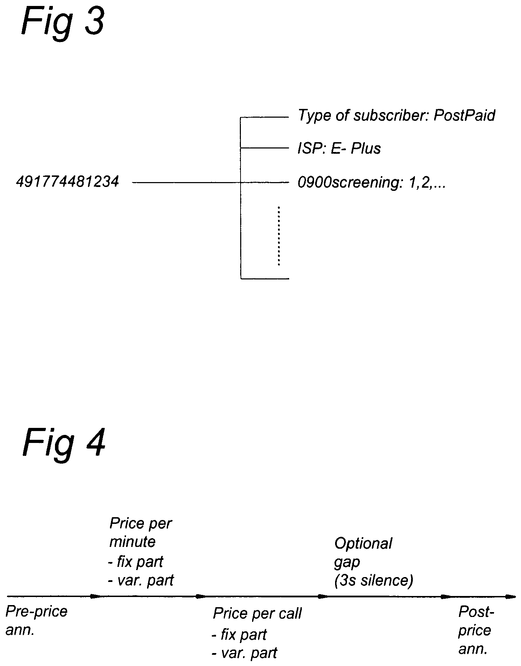

Figure 3 shows a principle scheme of a record in the database 26 for a subscriber with the MSISDN 491774481234. The subscriber has configured a screening for the services 1 and 2. To identify the corresponding premium rate number the 0900 service module 16 may administrate a mapping table e.g. see table 6 for an example.

**table 6**

| Screening index | service number | Announcement ID |
|---|---|---|
| 1 | 9001 | 42 |
| 2 | 9002 | 42 |
| 3 | 9003 | 42 |
| : | : | : |
| 10 | 900 | 152 |
| : | : | : |

Table 6 shows a mapping between screening index and premium rate service number. If a subscriber profile describes a screening for a 0900 number, the 0900 service module 16 will inform the subscriber with an announcement regarding this restriction. The related announcement ID shall be administrated also in table 6. Afterwards the 0900 service module 16 will release the call.

In an embodiment, the 0900 service module 16 is arranged to compare the called party number in an INAP IDP message with the service number in table 6 using a longest match operation. The number of digits for a service number shall for example be 24 digits. The number of entries in table 6 is not restricted.

In an embodiment, the 0900 service module 16 is arranged to initiate an announcement for the price per minute and price per call before connecting. The announcement itself is produced a the VANG 14. Before connecting the call to the service provider concerned, the subscriber shall be informed about the price of the call. The announcement shall may consist of the following information:
- price per minute,
- price per call.

The 0900 service module will invoke the announcements. The required information of price per minute and price per call are described in table 1. E.g. the tariff cluster 01 for PostPaid subscribers of the ISP E-Plus requires the following announcements (examples):
"The price per minute for this call is 19 Cent", or
"The price per call is 1 Euro".

The 0900 service module 16 may be arranged to ensure the right price announcements. E.g. if a price per minute is 159 cent, then the subscriber must hear the announcement "1 Euro and 59 cent". The 0900 service module 16 may generate first the announcement price per minute and afterwards price per call. Before connecting the call a gap of for example 3 seconds after the price announcement(s) may be provided to the subscriber to provide her the possibility to refuse the call. In case the call will be refused, the subscriber shall be not charged. The gap of 3 seconds silence may be also generated by an announcement. The gap (like a UNIX sleep operation) may as well be configurable in the 0900 service module 16. Preferably, the unit to configure the sleep shall be milliseconds (ms). The gap may be handled as an add on to the announcement behind the 'price' announcements.

In an embodiment, further scenarios are also covered by the 0900 service module 16. These scenarios comprise:
- The 0900 number is not reachable,
- The 0900 service is currently not reachable.

Depending of the bearer service (see table 3) the 0900 service may provide the possibility to configure a voice, text (USSD) announcement or no announcement, e.g. no announcement for non-speech services. The 0900 service module 16 may be arranged to support to address the announcements in the MSC 2 (or VANG 14) or an external IP 14. Possible faulty scenarios which requires an announcements are (example of announcements):
- LDAP database is not reachable -> "The 0900 service is currently not reachable"
- 0900 service number is blocked by the subscriber -> "The 0900 number is not reachable on customer demand".
- 0900 number is not provided in table 3 -> "The 0900 number is not reachable"
- Internal error, e.g. mapping of tariff cluster in table 1 and 2 does not match -> "The 0900 number is not reachable"
- External IP is not reachable -> Call will be released by the 0900 service.

In an embodiment, before the announcement of price per minute and after the announcement of price per call the 0900 service module 16 provides the option to play additional announcements. One before and one after. The corresponding IDs shall be administrated in the table mentioned above. In case the announcements do not contain an ID no announcements has to be generated (in this case no INAP play_announcement message is necessary). The announcements IDs may be administrated in a separate table in the 0900 service module 16, see table 7. All parameters of this table may be configurable. If one parameter "price per minute" or "price per call" is zero(0) in table 1, then no announcement will be generated or invoked by the 0900 service module 16. This means no INAP play_announcement message will be generated. In table 7 the announcements (2) and (3) exist out of an fix and a variable part. The variable part announces the amount/price described in table 1.

**Table 7**

| Service | Pre-announcement (1) | Price per minute (2) | Price per Call (3) | Post-announcement (4) | play list |
|---|---|---|---|---|---|
| 0900 | 420 | 0 | 300 | 200 | 1, 3, 4 |
| 0900 | 420 | 250 | 0 | 200 | 1, 2, 4 |
| 0900 | 0 | 250 | 300 | 0 | 2, 3 |
| 0900 | 420 | 250 | 300 | 200 | 1, 2, 3, 4 |

Figure 4 illustrates a sequence of announcements which may be generated by the 0900 service module 16. In case of four announcements there are 16 different scenarios possible. The announcement after the announcements 'price per minute' and 'price per call' contains e.g. the gap of 3 second.

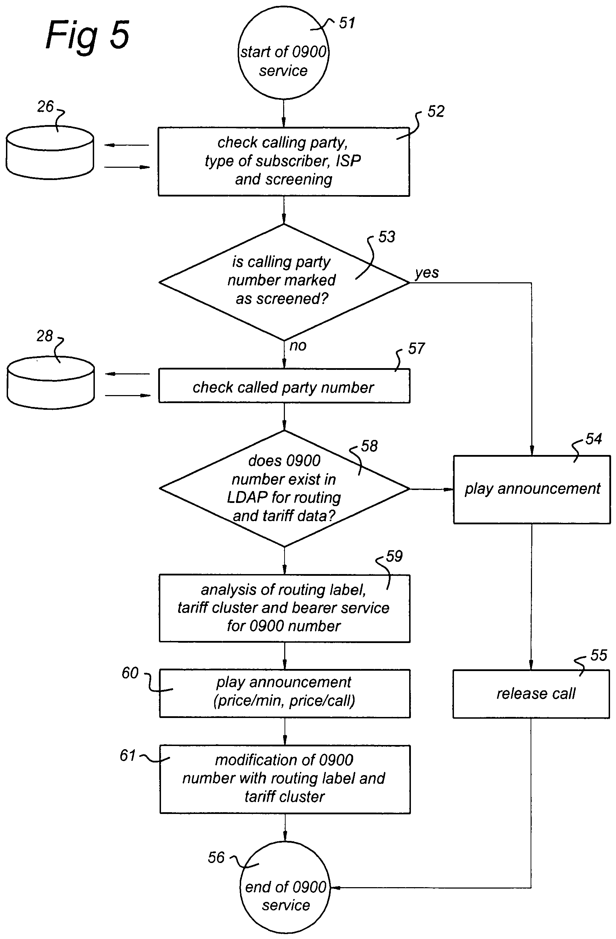

Figure 5 shows a flow chart of actions taken by the 0900 service module 16 according to an embodiment of the invention. The 0900 service module 16 cooperates with the already existing IN PrePaid 20 and VPN services 20, see figure 2. In a first step 51, the 0900 service module 16 is invoked by the MSC 2 in case a mobile subscriber (i.e. calling party) calls a 0900 called party number. In a step 52, the 0900 service module 16 accesses the database 26 to find for a specific calling party number, e.g. +491774481234, the type of the subscriber, the ISP and the screening information for that calling party number. In case the specific 0900 number is marked as 'screened', the 0900 service module will play or invoke an announcement, see step 54 and will release the call afterwards, see step 55. This will end the procedure at step 56. If the called party is not marked as screened, step 53 is followed by a step 57 in which a second database 28 is accessed to determine the routing label, tariff cluster and possibly the bearer service for the specific 0900 number (i.e. the called party number). In case the 0900 called party number does not exist in the database 28, see step 58, the 0900 service module 16 will play or invoke an announcement (step 54) and to release the call afterwards (step 55). In case of no restriction for the 0900 number (called party) the 0900 service module 16 will analyze the tariff cluster, routing label and the bearer service, see step 59. Depending on the tariff cluster, the type of subscriber and the ISP the 0900 service module 16 will initiate an announcement with the information of price per minute and price per call of the 0900 number (called party), see step 60. Next in a step 61, the 0900 number (called party) is modified by way of putting a prefix containing the routing label (e.g. ClC) and the tariff cluster in front of the called party number. Then, the 0900 service ends at step 56.

The 0900 service module ensures the correct billing of all 0900 numbers for the subscribers. A distinction is made between Post- or Prepaid subscribers. For both types of subscribers a different accounting is required. Due to the specific arrangement of the 0900 service module 16, the introduction of the 0900 service requires no modifications in the existing IN Pre and PostPaid (VPN) services. Except for the tariff data for the PrePaid service.

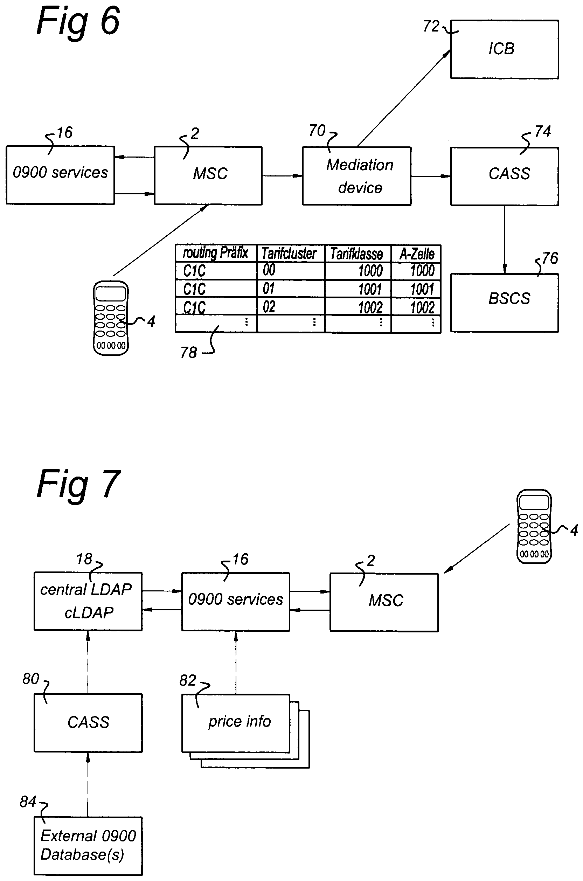

Figure 6 schematically depicts a part of the billing structure of the telecom network in which the 0900 service module 16 according to an embodiment is implemented. The MSC 2 forwards the modified called party number, also referred to as modified B-number, to a mediation device 70. The mediation device 70 may be a state of the art mediation device which needs adjustment in order to process the modified B-numbers. The mediation device 70 is arranged to communicate with a ICB 72. Furthermore, the mediation device 70 is arranged to communicate with a CASS system 74 that is connected to a BSCS 76 in order to pass for example so-called 'tariff classes'. The new mediation device 70 is arranged to administer a table called the tariff class table 78. In the tariff class table 78, specific tariff classes are related to the specific routing prefixes and a specific tariff cluster. In the example shown in figure 6, the tariff class 1000 is related to the routing prefix "ClC" and the tariff cluster "00". This means that a call to a called number "ClC00xxxxxxxx" will be billed by the BSCS using the tariff class "1000".

Figure 7 schematically shows the IN service module 16 together with the database it receives information from. As was explained above, the IN service module 16 is arranged to access one or more central databases 18 for retrieving subscriber data and ISP and tariff data. The central database 18 is receiving input from an internal database server 80, such as a CASS or an inventory server 80. This internal database server 80 receives input from an external 0900 database 82. The external database 82 may be a database managed by an other ISP and stores data such as the available 0900 PRS numbers of a specific ISP, the associated tariff clusters, the routing prefixes (such as "ClC"), and the bearer service type. (Voice, Data, Fax). The internal database server 80 will use the data received to generate a consolidated list with 0900 call numbers with the appropriate tariff clusters and routing prefixes. This information will be presented to the central database 18 together with black list information (i.e. screening info). The internal database server 80 may be further arranged to generate a price list with the 0900 service numbers for Pre-/Postpaid and ISP dependent 0900 prices which may be requested from the side of EHB or the Internet. Also a price list in a PDF format may be produced by the internal database server 80.

Each ISP can provide its own "external database" 82 so as to provide the specific prices grouped into the specific tariff clusters. The tariff cluster information is published by the owner of the IN service module 16, so that the ISPs concerned can deliver their specific PRS prices.

While specific embodiments of the invention have been described above, it will be appreciated that the invention may be practiced otherwise than as described. For example, the IN service module 16 may comprise a plurality of devices. The descriptions above are intended to be illustrative, not limiting. Thus, it will be apparent to one skilled in the art that modifications may be made to the invention as described without departing from the scope of the claims set out below.

## Claims

1. Method of administrating a call message from a mobile switching center of a mobile communication network, wherein the method is performed within an Intelligent Network (16) arranged to communicate with a mobile switching center (2) of a mobile communication network, the method comprises the following steps:
- receiving a call message from said mobile switching center (2) comprising a calling party number and a called party number;
- retrieving a routing label and a tariff cluster number from a first database (28) using said called party number;
- modifying said called party number by adding said routing label and said tariff cluster number as a prefix to said called party number to render a modified called party number;
- sending a routing message to said mobile switching center (2) comprising said modified called party number;
- retrieving screening information from a second database (26) using said calling party number;
- releasing the call if said called party number is marked screened in the second database (26).

2. The method according to claim 1, wherein the Intelligent Network:
- retrieves price information from a table comprising possible tariff cluster and corresponding prices,
- invokes a play announcement comprising a voice message for a price of a call.

3. The method according to any of the preceding claims, wherein said tariff cluster number comprises two digits.

4. The method according to any of the preceding claims, wherein said tariff cluster number determines a price of a group of PRS numbers.

5. The method according to any of the preceding claims, wherein said PRS numbers provide access to 0900 services.

6. An Intelligent Network (16) arranged to perform the method according to any of the preceeding claims.

7. Mobile communication network comprising an Intelligent Network (16) according to claim 6.

## Patentansprüche

1. Verfahren zum Verwalten einer Rufmeldung von einer Mobilvermittlungsstelle eines Mobilkommunikationsnetzes, wobei das Verfahren in einem intelligenten Netz (16) ausgeführt wird, das ausgelegt ist, um mit einer Mobilvermittlungsstelle (2) eines Mobilkommunikationsnetzes zu kommunizieren, wobei das Verfahren die folgenden Schritte umfasst:
- Empfangen einer Rufmeldung von der Mobilvermittlungsstelle (2), welche eine Nummer des Anrufers und eine Nummer des Angerufenen umfasst;
- Abrufen eines Routing-Labels und einer Tarifclusternummer aus einer ersten Datenbank (28) unter Verwenden der Nummer des Angerufenen;
- Modifizieren der Nummer des Angerufenen durch Hinzufügen des Routing-Labels und der Tarifclusternummer als Präfix zu der Nummer des Angerufenen, um eine modifizierte Nummer des Angerufenen wiederzugeben;
- Senden einer Routing-Meldung zu der Mobilvermittlungsstelle (2), welche die modifizierte Nummer des Angerufenen umfasst;
- Abrufen von Überprüfungsinformationen von einer zweiten Datenbank (26) unter Verwenden der Nummer des Anrufers;
- Freigeben des Rufs, wenn die Nummer des Angerufenen in der zweiten Datenbank (26) als überprüft markiert ist.

2. Verfahren nach Anspruch 1, wobei das intelligente Netz:
- Preisinformationen aus einer Tabelle abruft, die möglichen Tarifcluster und entsprechende Preise umfasst,
- eine Abspielansage aufruft, die eine Sprachmitteilung für einen Preis eines Anrufs umfasst.

3. Verfahren nach einem der vorhergehenden Ansprüche, wobei die Tarifclusternummer zwei Stellen umfasst.

4. Verfahren nach einem der vorhergehenden Ansprüche, wobei die Tarifclusternummer einen Preis einer Gruppe von PRS-Nummern bestimmt.

5. Verfahren nach einem der vorhergehenden Ansprüche, wobei die PRS-Nummern Zugang zu 0900-Diensten bieten.

6. Intelligentes Netz (16), welches ausgelegt ist, um das Verfahren nach einem der vorhergehenden Ansprüche auszuführen.

7. Mobilkommunikationsnetz, welches ein intelligentes Netz (16) nach Anspruch 6 umfasst.

## Revendications

1. Procédé de gestion d'un message d'appel provenant d'un centre de commutation du service des mobiles d'un réseau de communication mobile, dans lequel
le procédé est exécuté dans un réseau intelligent (16) agencé pour communiquer avec un centre de commutation du service des mobiles (2) d'un réseau de communication mobile, le procédé comprenant les étapes suivantes :
- réception d'un message d'appel provenant dudit centre de commutation du service des mobiles (2) comprenant un numéro d'appelant et un numéro d'appelé ;
- extraction d'une étiquette d'acheminement et d'un numéro de groupe tarifaire d'une première base de données (28) au moyen dudit numéro d'appelé ;
- modification dudit numéro d'appelé en ajoutant ladite étiquette d'acheminement et ledit numéro de groupe tarifaire en préfixe audit numéro d'appelé afin d'obtenir un numéro d'appelé modifié ;
- envoi d'un message d'acheminement audit centre de commutation du service des mobiles (2) comprenant ledit numéro d'appelé modifié ;
- extraction d'informations de filtrage d'une seconde base de données (26) au moyen dudit numéro d'appelant ;
- libération de l'appel si ledit numéro d'appelé est marqué comme filtré dans la seconde base de données (26).

2. Procédé selon la revendication 1, dans lequel le réseau intelligent :
- extrait des informations de prix d'une table comprenant un groupe tarifaire possible et des prix correspondants,
- appelle une annonce de lecture comprenant un message vocal pour un prix d'un appel.

3. Procédé selon l'une quelconque des revendications précédentes, dans lequel ledit numéro de groupe tarifaire comprend deux chiffres.

4. Procédé selon l'une quelconque des revendications précédentes, dans lequel ledit numéro de groupe tarifaire détermine un prix d'un groupe de numéros de services de kiosque.

5. Procédé selon l'une quelconque des revendications précédentes, dans lequel lesdits numéros de services de kiosque fournissent un accès à des services 0900.

6. Réseau intelligent (16) agencé pour exécuter le procédé selon l'une quelconque des revendications précédentes.

7. Réseau de communication mobile comprenant un réseau intelligent (16) selon la revendication 6.
